# EUROPÄISCHE PATENTANMELDUNG

(11) **EP 1 335 556 A1**
(43) Veröffentlichungstag der Anmeldung: **13.08.2003**
(21) Anmeldenummer: 02002642.3
(22) Anmeldetag: 05.02.2002
(51) Int. Cl.: H04L 29/06, H04L 12/56

(54) **Verfahren zur Übertragung von Datenpaketen verschiedener Verkehrsklassen über eine Verbindung zwischen zwei Knoten eines Kommunikationssystems**

(71) Anmelder: SIEMENS AKTIENGESELLSCHAFT, 80333 München (DE)
(72) Erfinder: Heiss, Herbert, Dr., 82008 Unterhaching (DE); Menth, Michael, 97255 Oellingen (DE); Reim, Thomas, 88481 Balzheim (DE); Schmid, Matthias, 97070 Würzburg (DE)

(57) **Zusammenfassung**

Zur Übertragung von Datenpaketen verschiedener Verkehrsklassen wird jeder Verkehrsklasse eine Priorität zugeordnet. Die Datenpakete werden in einem ersten Knoten zwischengespeichert. Dabei wird jedem Datenpaket eine Sendezeit zugewiesen, die von der Ankuftszeit des Datenpaketes im ersten Knoten und einer der jeweiligen Verkehrsklasse zugeordneten Verzögerungszeit abhängt, wobei die der jeweiligen Verkerhrsklasse zugeordnete Verzögerungszeit mit zunehmender Priorität der Verkehrsklasse abnimmt. Es wird jeweils das Datenpaket mit der frühesten Sendezeit vom ersten Knoten zu einem zweiten Knoten übertragen.

Vorzugsweise wird für jede Verkehrsklasse eine Warteschlange gebildet. In einem Ausführungsbeispiel Können die Datenpakete in Teilpakete zeulegt werden. Die Verkehrsklasse entsprechen vorzugsweise Sprachverbindungen und paketvermittelten Datenverbindungen. Das Verfahren ist vorteilhaft anwendbar auf die Übertragung von Zellen in einem ATM- Netzwerk und auf die Übertragung von Datenpaketen zwischen einer Basistation und einer Funknetzsteurung eines Funkkommunikationssystems nach dem UMTS-Standard.

## Beschreibung

Zwischen zwei Knoten eines Kommunikationssystems werden vielfach Datenpakete übertragen, die aus unterschiedlichen Quellen stammen. In diesem Fall werden die Datenpakete in einer Warteschlange in einem der Knoten zwischengespeichert und dann in einem Multiplexverfahren über eine Verbindung zwischen den Knoten übertragen. Mitunter sind die Datenpakete in verschiedene Verkehrsklassen eingeteilt, für die unterschiedliche Qualitätskriterien gelten. Beispielsweise wird für eine Verkehrsklasse eine maximale Verzögerung zugesagt, die bei Übertragung von Daten aus dieser Verkehrsklasse auftritt. Diese maximalen Verzögerungen können sich zwischen den verschiedenen Verkehrsklassen deutlich unterscheiden.

In einem Funkkommunikationssystem entsprechend oder ähnlich dem UMTS-Standard werden beispielsweise verschiedene Verkehrstypen auf eine Verbindung oder einen Verkehrspfad gemultiplext. Die verschiedenen Verkehrstypen sind Sprachverkehr, leitungsvermittelter Datenverkehr wie zum Beispiel Fax, und paketvermittelter Datenverkehr, wie zum Beispiel Datenverkehr entsprechend dem Internetprotokoll. Diese Daten gelangen von unterschiedlichen Quellen zu einer Funknetzsteuerung, die diese über eine Verbindung zu einer Basisstation, die im UMTS-Standard Node B genannt wird, überträgt. Für diese Übertragung werden verschiedene Qualitätsanforderungen gestellt. Für alle Verkehrstypen gilt, dass möglichst wenig Daten verloren gehen sollen. Gleichzeitig gilt aber, dass die Verbindung zur Basisstation wirtschaftlich effizient genutzt, d. h. möglichst vollständig ausgelastet wird. Um beiden Kriterien gerecht zu werden, nutzt man Unterschiede in der Qualitätsanforderung für eine Differenzierung des Verkehrs. Bezüglich der Verzögerung bei der Übertragung lassen sich die Verkehrstypen z. B. in zwei Verkehrsklassen einteilen: Eine erste Verkehrsklasse umfasst den Sprachverkehr und den leitungsvermittelten Datenverkehr. Für diese erste Verkehrsklasse wird gefordert, dass die Wahrscheinlichkeit, dass die Übertragung eines Datenpakets länger als eine maximale Verzögerung benötigt, geringer als z. B. 10⁻⁴ ist. Einer zweiten Verkehrsklasse wird der paketvermittelte Datenverkehr zugeordnet, für den die Wahrscheinlichkeit, dass die Vermittlung eines Datenpakets länger als die maximale Verzögerung dauert, kleiner oder gleich 10⁻² sein soll. Die maximale Verzögerung beträgt etwa 5 ms.

Diese unterschiedlichen Qualitätsanforderungen münden darin, dass der ersten Verkehrsklasse eine höhere Priorität als der zweiten Verkehrsklasse zuzuordnen ist.

Für die Übertragung der Daten der verschiedenen Verkehrsklassen über die gemeinsame Verbindung ist eine zeitliche Steuerung der Daten erforderlich. Diese zeitliche Steuerung wird vielfach als Scheduling bezeichnet. Zur zeitlichen Steuerung eines Multiplexverfahrens sind verschiedene Vorschläge bekannt:

Bei dem sogenannten FIFO-Scheduling werden alle Daten in eine Warteschlange eingereiht und aus dieser Warteschlange in der Reihenfolge ihrer Ankunftszeit ausgelesen. Bei diesem Verfahren wird nicht zwischen den unterschiedlichen Verkehrsklassen unterschieden. Daher müssen für alle Daten die strengeren Qualitätsanforderungen der ersten Verkehrsklasse angewandt werden. Daher wird in den meisten Fällen keine optimale Ausnutzung der Verbindungskapazität erreicht.

Bei dem sogenannten statischen Prioritätenscheduling, einer Zeitsteuerung nach Prioritäten, werden in dem Knoten zwei Warteschlangen gebildet. Die Daten der ersten Verkehrsklasse werden in eine erste Warteschlange, die Daten der zweiten Verkehrsklasse werden in eine zweite Warteschlange eingelesen. Wegen der höheren Qualitätsanforderungen an die Datenübertragung der Daten der ersten Verkehrsklasse erhält die erste Warteschlange eine höhere Priorität als die zweite Warteschlange. Zur Übertragung von Datenpaketen, die in den Warteschlangen gespeichert sind, werden zunächst die Datenpakete, die in der ersten Warteschlange gespeichert sind, übertragen. Ist die erste Warteschlange leer, so werden Datenpakete, die in der zweiten Warteschlange gespeichert sind, übertragen. Für die Daten der zweiten Verkehrsklasse, denen eine geringere Priorität zukommt, werden somit Pausen genutzt, in denen keine Daten der ersten Verkehrsklasse übertragen werden müssen. Für den Fall, dass sehr viele Daten der ersten Verkehrsklasse übertragen werden, kann es bei diesem Verfahren schwierig werden, die Qualitätsanforderungen für die zweite Verkehrsklasse zu erfüllen. Dieses Problem kann nur dadurch gelöst werden, dass die Auslastung der Verbindung reduziert wird.

Eine weitere Möglichkeit der Zeitsteuerung besteht im sogenannten Earliest Deadline First (EDF) Scheduling. Hierbei wird jedem Datenpaket, das den Knoten erreicht, eine Sendezeit zugewiesen. Die Sendezeit wird berechnet als Summe aus der Ankunftszeit des Datenpaketes und der maximalen Verzögerung. Die Datenpakete werden anschließend in der Reihenfolge ihrer Sendezeiten ausgelesen. Das Datenpaket mit der frühesten Sendezeit wird als erstes ausgelesen. Da für die betrachtete Anwendung die maximale Verzögerung für alle Datenpakete gleich ist, ist das Ergebnis des EDF-Scheduling in diesem Fall das gleiche wie das Ergebnis des FIFO-Scheduling.

Der Erfindung liegt das Problem zugrunde, ein Verfahren zur Übertragung von Datenpaketen verschiedener Verkehrsklassen zwischen zwei Knoten eines Kommunikationssystems anzugeben, bei dem die Verbindung zwischen den beiden Knoten des Kommunikationssystems besser ausgenutzt wird.

Dieses Problem wird erfindungsgemäß gelöst durch ein Verfahren gemäß Anspruch 1. Weitere Ausgestaltungen der Erfindung gehen aus den übrigen Ansprüchen hervor.

In dem Verfahren zur Übertragung von Datenpaketen verschiedener Verkehrsklassen über eine Verbindung zwischen zwei Knoten eines Kommunikationssystems wird jeder Verkehrsklasse eine Priorität zugeordnet. Die Datenpakete werden in einem ersten Knoten zwischengespeichert. In dem ersten Knoten wird jedem Datenpaket eine Sendezeit zugewiesen, die von der Ankunftszeit des Datenpaketes im ersten Knoten und einer Verzögerungszeit, die der jeweiligen Verkehrsklasse zugeordnet ist, abhängt. Dabei nimmt die der jeweiligen Verkehrsklasse zugeordnete Verzögerungszeit mit zunehmender Priorität der Verkehrsklasse ab. Die Verzögerungszeiten liegen zwischen 0 und einer maximalen Verzögerung. Es wird jeweils das Datenpaket mit der frühesten Sendezeit vom ersten Knoten zu einem zweiten Knoten übertragen.

Das Verfahren ist somit ein zweistufiges Scheduling: In einer ersten Stufe werden Warteschlangen gebildet, in einer zweiten Stufe wird bestimmt, aus welcher Warteschlange ausgelesen wird.

Das Verfahren ist anwendbar auf Übertragungen mit einer beliebigen Anzahl an Verkehrsklassen. Es ist anwendbar für die Übertragung zwischen Knoten eines beliebigen Kommunikationssystems, insbesondere eines Funkkommunikationssystems. Darüber hinaus ist das Verfahren anwendbar auf die Übertragung von Datenpaketen verschiedener Verkehrsklassen zwischen zwei Knoten eines Festnetzes entsprechend dem Internetprotokoll. Weitere Anwendungsmöglichkeiten bestehen bei ATM-Zellen oder AAL2-Datenpaketen. Weitere Anwendungen des Verfahrens, z. B. innerhalb eines Rechners, in der Automatisierungstechnik usw., sind ebenfalls sinnentsprechend.

Vorzugsweise wird die Sendezeit als Summe aus der Ankunftszeit des jeweiligen Datenpaketes und der zugeordneten Verzögerungszeit berechnet. Diese Berechnungsmethode ist mit geringem Aufwand durchführbar.

Es liegt im Rahmen der Erfindung, in dem ersten Knoten für jede Verkehrsklasse eine Warteschlange vorzusehen, in der die Datenpakete und die zugehörigen Sendezeiten der jeweiligen Verkehrsklasse gespeichert werden. Zur Steuerung der Übertragung der Datenpakete über die Verbindung wird die Warteschlange ermittelt, die das Datenpaket mit der frühesten Sendezeit enthält. Falls in verschiedenen Warteschlangen Datenpakete mit übereinstimmender frühester Sendezeit gespeichert sind, wird zunächst das Datenpaket übertragen, dessen Verkehrsklasse die höhere Priorität hat.

Auf diese Weise wird sichergestellt, dass Datenpakete einer Verkehrsklasse, für die eine höhere Priorität vorgesehen ist, zügig übertragen werden, ohne dass Datenpakete einer Verkehrsklasse, für die eine geringere Priorität vorgesehen ist, allzu sehr vernachlässigt werden.

Für jede der Verkehrsklassen C1, C2,...........Cn wird eine Warteschlange Qi, i=1,2.....n eingerichtet. Bei Eintreffen eines Datenpaketes der Verkehrsklasse Ci wird dieses in der Warteschlange Qi gemeinsam mit seiner Sendezeit t_{s,i} gespeichert. Die Sendezeit t_{s,i} berechnet sich aus der Ankunftszeit tₐ und einer der Verkehrsklasse Ci zugeordneten Verzögerungszeit di: t_{s,i} = tₐ + dᵢ. Dabei gilt 0≤d₁ < d₂ < ... <dₙ, wobei C1 die Verkehrsklasse mit der höchsten Priorität und Cn die Verkehrsklasse mit der niedrigsten Priorität ist. Die Priorität der Verkehrsklassen nimmt von C1 bis Cn kontinuierlich ab.

Zur Ermittlung des Datenpaketes mit der frühesten Sendezeit liegt es im Rahmen der Erfindung, zunächst diejenigen Warteschlangen zu ermitteln, die nicht leer sind. Dann werden unter den nicht leeren Warteschlangen diejenige oder diejenigen ermittelt, in der ein Datenpaket gespeichert ist, dessen Sendezeit kleiner oder gleich der Sendezeit der Datenpakete der anderen nicht leeren Warteschlangen ist. Falls es noch weitere Datenpakete mit derselben Sendezeit gibt, wird die höchstpriore der betreffenden Warteschlangen genommen, d.h. diejenige mit dem kleinsten Index i. Dieses Datenpaket wird als das Datenpaket mit der frühesten Sendezeit betrachtet und als erstes von dem ersten Knoten zu dem zweiten Knoten übertragen.

Alternativ kann bei gleicher Vorgehensweise, falls es weitere Packete mit derselben Sendezeit gibt, irgendeines dieser Packte genommen werden. Das Verhalten der beiden Algorithmen ist sehr ähnlich, sofern nur wenige Datenpakete gleichzeitig ankommen. Das gleichzeitige Ankommen von Datenpaketen wird unwahrscheinlicher, je feiner die Zeit gemessen wird.

Für den Fall, dass die Datenpakete, die in dem ersten Knoten eintreffen, zu groß sind für die Übertragung über die Verbindung zwischen dem ersten Knoten und dem zweiten Knoten, liegt es im Rahmen der Erfindung, die Datenpaket im ersten Knoten in Teilpakete zu zerlegen. Diese Teilpakete werden jeweils mit der dem Datenpaket zugewiesenen Sendezeit zwischengespeichert. Es wird jeweils das Teilpaket mit der frühesten Sendezeit vom ersten Knoten zum zweiten Knoten übertragen. Dabei ist es vorteilhaft, die Zerlegung in Teilpakete vor dem Zwischenspeichern gemeinsam mit der Sendezeit vorzunehmen, da ohnehin nur kleinere Teilpakete über die Verbindung übertragen werden können.

Das Verfahren hat den Vorteil, dass der Sortieraufwand geringer als beim EDF-Verfahren ist. Es müssen nämlich nur die Sendeszeiten der ersten Pakete in den n Warteschlangen verglichen werden. Beim EDF Verfahren müssen jedoch alle Pakete durchsortiert werden und das Paket mit der niedrigsten Sendezeit gesucht werden.

Das Verfahren ist vorteilhaft anwendbar auf die Übertragung von Datenpaketen unterschiedlicher Verkehrsklassen zwischen einer Basisstation und einer Funknetzsteuerung eines Funkkommunikationssystems. In Funkkommunikationssystemen der dritten Generation entsprechend oder ähnlich dem UMTS-Standard hat sich dabei für die Basisstation der Begriff Node B und für die Funknetzsteuerung der Begriff Radio Network Controler oder RNC eingebürgert. Je nach Übertragungsrichtung kann der erste Knoten dabei sowohl die Basisstation als auch die Funknetzsteuerung sein. Entsprechend stellt der zweite Knoten die Funknetzsteuerung beziehungsweise die Basisstation dar.

Es liegt im Rahmen der Erfindung, in einem Funkkommunikationssystem Daten von Sprachverbindungen und leitungsvermittelte Daten als Paketdaten einer ersten Verkehrsklasse zu behandeln. Paketvermittelte Daten werden als Paketdaten einer zweiten Verkehrsklasse behandelt. Dabei ist die Priorität der ersten Verkehrsklasse höher als die Priorität der zweiten Verkehrsklasse.

Im Weiteren wird die Erfindung anhand eines Ausführungsbeispiels und der Figuren näher erläutert.

Figur 1 zeigt eine schematische Darstellung der funktionalen Einheiten eines Funkkommunikationssystems.

Figur 2 zeigt einen Datenstrom mit Paketdaten zweier Verkehrsklassen.

Figur 3 zeigt die Zwischenspeicherung der Paketdaten in zwei Warteschlangen.

Figur 4 zeigt die Sendereihenfolge der Paketdaten zwischen dem ersten Knoten und dem zweiten Knoten.

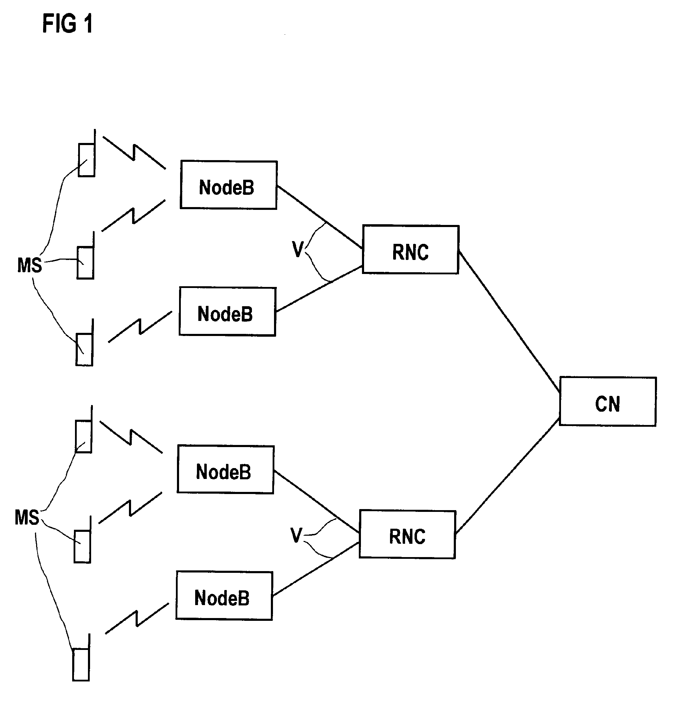

Ein Funkkommunikationssystem (siehe Figur 1) umfasst eine Vielzahl an Basisstationen Node B, die jeweils einer Funknetzsteuerung RNC zugeordnet sind. Zwischen der jeweiligen Basisstation Node B und der zugeordneten Funknetzsteuerung RNC besteht dabei eine Verbindung V. Die Funknetzsteuerungen RNC stellen die Verbindung zu einem Weitverkehrsnetz CN dar, über das Daten zu einem jeweiligen Ziel transportiert werden. Zu diesem Zweck umfasst das Weitverkehrsnetz CN, auch Core Network genannt, eine Vielzahl von Vermittlungseinrichtungen sowie Übergänge zu anderen Netzen oder dem Internet. Ferner umfasst das Weitverkehrsnetz CN Datenbanken, die zur Mobilitätsverwaltung, Teilnehmerverwaltung und für die Abrechnung genutzt werden. Das Weitverkehrsnetz CN umfasst darüber hinaus Einrichtungen für das Netzmanagement.

Die Basisstationen Node B sind Funkstationen, die über eine Luftschnittstelle eine Nachrichtenverbindung zu einer Mobilstation MS aufbauen können. Über diese Nachrichtenverbindungen werden unterschiedliche Datenarten übertragen. Zum Einen werden Sprachdaten und leitungsvermittelte Daten, wie zum Beispiel Fax-Daten, zum Anderen werden paketvermittelte Daten, wie zum Beispiel Datenverkehr entsprechend dem Internetprotokoll, übertragen. An Sprachdaten, sowie an leitungsvermittelte Daten werden dabei schärfere Qualitätsanforderungen bezüglich der durch die Übertragung verursachten Zeitverzögerung gestellt. Diese unterschiedlichen Datenarten werden einerseits von der Mobilstation über eine der Basisstationen Node B in das Funkkommunikationsnetz übertragen, andererseits werden diese unterschiedlichen Daten aus dem Funkkommunikationssystem zur dem jeweiligen Teilnehmer zugeordneten Mobilstation MS transportiert. Diese unterschiedlichen Daten müssen unter Anderem gemeinsam über die Verbindung V zwischen Funknetzsteuerung RNC und Basisstation Node B und umgekehrt, geleitet werden. Die Daten werden im Multiplexverfahren über die Verbindung V geleitet, wobei eine Zeitsteuerung erfolgt.

Sprachdaten und leitungsvermittelte Daten, an die höhere Qualitätsanforderungen bezüglich der bei der Übertragung auftretenden Zeitverzögerungen gestellt werden, werden einer ersten Verkehrsklasse zugeordnet, die mit höherer Priorität übertragen wird. Die paketvermittelten Daten, an die geringere Anforderungen bezüglich der Verzögerungszeit bei der Datenübertragung gestellt werden, werden einer zweiten Verkehrsklasse zugeordnet, die mit geringerer Priorität übertragen wird.

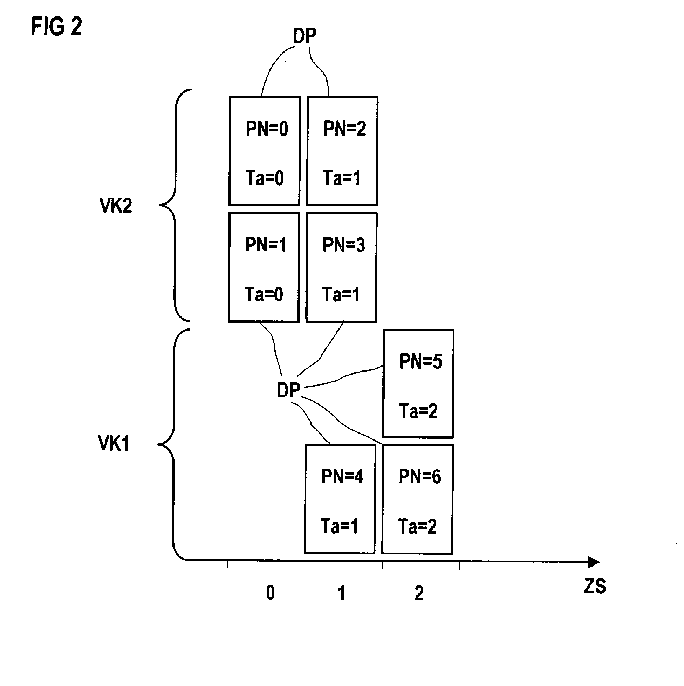

Ein Ausführungsbeispiel für das Verfahren zur Übertragung von Paketdaten unterschiedlicher Verkehrsklassen zwischen einem ersten Knoten und einem zweiten Knoten wird im Folgenden anhand von Figur 2 bis 4 näher erläutert. Es wird die Übertragung der Paketdaten der anhand von Figur 1 erläuterten ersten Verkehrsklasse und zweiten Verkehrsklasse zwischen der Funknetzsteuerung RNC und der Basisstation Node B erläutert. Die Paketdaten stammen aus unterschiedlichen Quellen und erreichen die Funknetzsteuerung RNC. In Figur 2 ist der eingehende Datenstrom dargestellt. Die Paketdaten erreichen die Funknetzsteuerung RNC kontinuierlich. Zur besseren Verarbeitung werden die Ankunftszeiten Ta der Datenpakete in diskreten Einheiten von Zeitschlitzen ZS registriert. In Figur 2 sind eingehende Datenpakete DP dargestellt, wobei zu jedem der Datenpakete DP die Ankunftszeit Ta in Einheiten von Zeitschlitzen ZS und eine laufende Paketnummer PN, die die Reihenfolge im eingehenden Datenstrom kennzeichnet, angegeben. Im oberen Bereich der Figur 2 sind die Datenpakete DP der zweiten Verkehrsklasse VK2, im unteren Bereich der Darstellung die Datenpakete DP der ersten Verkehrsklasse VK1 dargestellt.

Die eingehenden Datenpakete DP werden in der Funknetzsteuerung RNC abhängig von ihrer Verkehrsklasse in eine erste Warteschlange WS1 und eine zweite Warteschlange WS2 geleitet. In der ersten Warteschlange WS1 werden die Datenpakete der ersten Verkehrsklasse VK1 zwischengespeichert. In der zweiten Warteschlange WS2 werden die Datenpakete der zweiten Verkehrsklasse VK2 zwischengespeichert. Zu jedem der Datenpakete DP wird eine Sendezeit Ts gespeichert, die folgendermaßen ermittelt wird: Für Datenpakete der ersten Verkehrsklasse VK1, die mit erhöhter Priorität übertragen werden sollen, ist die Sendezeit Ts gleich der Ankunftszeit Ta. Für Datenpakete DP der zweiten Verkehrsklasse VK2, die mit geringerer Priorität übertragen werden sollen, ergibt sich die Sendezeit Ts als Ankunftszeit Ta plus ein Zeitschlitz. Es wird also angenommen dass d1 = 0 und d2 = 1 Zeitschlitz. Die maximale Verzögerung, die in der Fachwelt vielfach als Delay Budget (DB) bezeichnet wird, beträgt in diesem System z.B. 5 Zeitschlitze.

In der ersten Warteschlange WS1 werden die Datenpakete DP der ersten Verkehrsklasse VK1 mit der zugehörigen Sendezeit Ts = Ta zwischengespeichert. In der zweiten Warteschlange werden die Datenpakete DP der zweiten Verkehrsklasse VK2 mit der zugehörigen Sendezeit Ts = Ta + 1ZS zwischengespeichert.

Für die Übertragung der Datenpakete zwischen der Funknetzsteuerung RNC und der Basisstation Node B wird in den Warteschlangen WS1, WS2 jeweils das Datenpaket DP mit der frühesten Sendezeit Ts ermittelt. Dazu wird folgender Algorithmus verwandt:

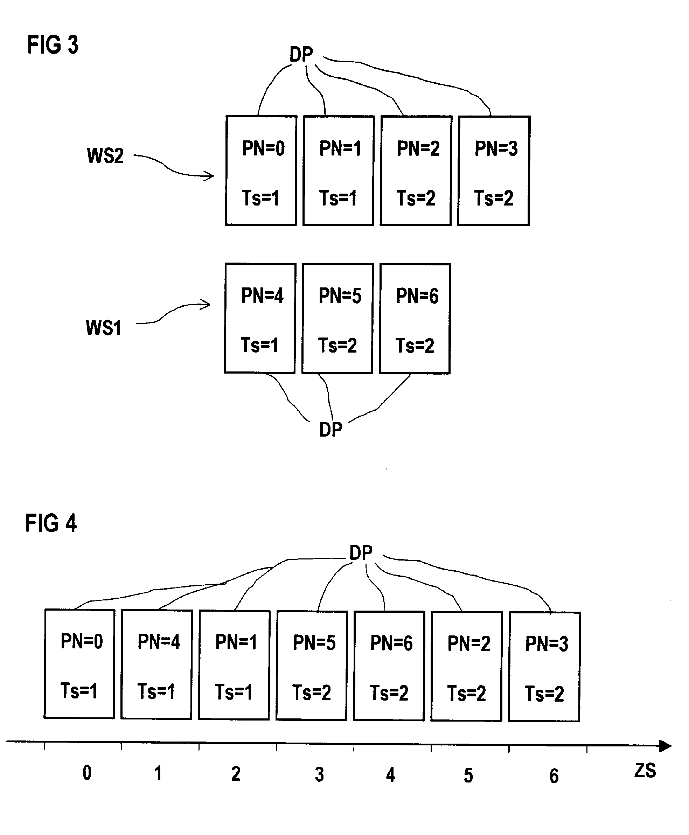

Wenn beide Warteschlangen WS1, WS2 nicht leer sind, wird festgestellt, ob für das erste Datenpaket DP in jeder der Warteschlangen WS1, WS2 gilt: Ts,1 ≤ Ts,2. Ist dieses der Fall, so wird zunächst das Datenpaket DP der ersten Warteschlange WS1 gesendet. Andernfalls wird das erste Datenpaket der zweiten Warteschlange WS2 gesendet. Ist nur eine der Warteschlangen WS1, WS2 nicht leer, so wird das erste Datenpaket DP der nicht leeren Warteschlange genommen. Da die Sendezeit Ts der Datenpakete DP der zweiten Warteschlange WS2 um einen Zeitschlitz bezogen auf die Ankunftszeit Ta des jeweiligen Datenpakets verlängert wird, werden die Datenpakete DP der ersten Warteschlange WS1, bei denen die Sendezeit Ts gleich der Ankunftszeit Ta des jeweiligen Datenpakets DP ist, bevorzugt übertragen. In Figur 4 ist die Sendereihenfolge, die sich gemäß dem beschriebenen Algorithmus ergibt, dargestellt.

Bei der Implementierung des Algorithmus muss berücksichtigt werden, dass die Zeitvariablen dann eine endliche Größe haben. Es erfolgt also die Umwandlung der kontinuierlichen Zeitgröße Ankunftszeit und Sendezeit in diskrete Zeitschlitze und somit in endliche Zietvariablen nach bekannten Methoden. In der Regel gibt es eine Systemzeit Tsys, die periodisch inkrementiert wird. Bei Ankunft eines Paketes wird dann die Ankunftszeit des Paketes Ta = Tsys gesetzt. Einige Methoden bestehen darin, die Systemzeit Tsys auf Null zu setzen, wenn ein Datenpaket DP ankommt und alle Warteschlangen WS1 und WS2 leer sind. Dieses Verfahren setzt voraus, dass beide Warteschlangen WS1, WS2 leer sind, bevor die Sendezeit Ts oder die Ankunftszeit Ta einen Maximalwert Tmax erreichen.

In einem anderen Verfahren wird die Systemzeit Tsys um den Betrag des Maximalwertes Tmax reduziert, sobald die Systemzeit Tsys den Maximalwert Tmax übersteigt. Gleichzeitig wird ein zur Systemzeit gehöriges Kalenderbit Arr_bit auf 1_Arr_bit gesetzt. Solange die aus Ta und di berechnete Sendezeit Ts kleiner der Maximalzeit Tmax ist, wird ein zum Paket gehöriges Sendebit DUE_bit = Arr_bit gesetzt. Übersteigt die Sendezeit Ts den Maximalwert Tmax, so wird die Sendezeit Ts = Ts - Tmax und das Sendebit DUE_bit = 1_Arr_bit gesetzt. Beim Vergleich der Sendezeiten Ts zweier Datenpakete DP aus zwei Warteschlangen wird geprüft, ob die Sendebits DUE-bit für beide Datenpakete gleich sind. Ist dies der Fall, so erfolgt der direkte Vergleich der Sendezeiten. Ist dies nicht der Fall, so wird auf die kleinere der Sendezeiten Ts der Betrag Tmax hinzuaddiert und dann werden die Sendezeiten verglichen.

Simulationen haben gezeigt, dass im Fall von zwei Verkehrsklassen die Kapazität der Verbindung am besten ausgelastet wird, wenn für die Sendezeit der ersten Verkehrsklasse mit höherer Priorität die Ankunftszeit der Datenpakete DP verwendet wird, und wenn für die Sendezeit der zweiten Verkehrsklasse mit geringerer Priorität die Sendezeit Ts = Ta + x gesetzt wird, wobei Ta die Ankunftszeit des jeweiligen Datenpakets DP ist und x ein Wert zwischen 0 und DB/2 (DB ist die maximale Verzögerung im System).

Die Annahme, dass d1=0 ist, stellt keine Einschränkung dar, da, wenn alle Werte di um eine Konstante d erhöht werden, sich ergibt dieselbe Auslesreihenfolge ergibt.

Verallgemeinert kann der Algorithmus folgendermaßen charakterisiert werden: Ein Datenpaket einer Verkehrsklasse VKi wird vor einem Datenpaket einer Verkehrsklasse VKj ausgelesen, wobei i ≤ j ist, wenn Ta,i + di ≤ Ta,j + dj. Dabei ist Ta,i die Ankunftszeit des Datenpakets der Verkehrsklasse VKi, di die der Verkehrsklasse VKi zugeordnete Verzögerungszeit, Ta,j die Ankunftszeit des Datenpakets der Verkehrsklasse VKj und dj die der Verkehrsklasse VKj zugeordnete Verzögerungszeit. Mit anderen Worten wird ein Datenpaket der Verkehrsklasse VKi vor einem Datenpaket der Verkehrsklasse VKj ausgelesen, falls die Ankunftszeit Ta,i des Datenpaketes der Verkehrsklasse VKi nicht mehr als dj - di vor der Ankunftszeit Ta,j des Datenpakets der Verkehrsklasse VKj liegt. Das bedeutet, dass die Datenpakete der Verkehrsklasse VKi bezüglich der Verzögerungszeit einen Vorteil von dj - di gegenüber den Datenpaketen der Verkehrsklasse VKj aufweisen. Das Verfahren ist auf beliebig viele Verkehrsklassen, d.h. auch mehr als zwei Verkehrsklassen, anwendbar.

## Patentansprüche

1. Verfahren zur Übertragung von Datenpaketen verschiedener Verkehrsklassen über eine Verbindung zwischen zwei Knoten eines Kommunikationssystems,
- bei dem jeder Verkehrsklasse eine Priorität zugeordnet wird,
- bei dem die Datenpakete in einem ersten Knoten zwischengespeichert werden,
- bei dem in dem ersten Knoten jedem Datenpaket eine Sendezeit zugewiesen wird, die von der Ankunftszeit des Datenpaketes im ersten Knoten und einer der jeweiligen Verkehrsklasse zugeordneten Verzögerungszeit abhängt, wobei die der jeweiligen Verkehrsklasse zugeordnete Verzögerungszeit mit zunehmender Priorität der Verkehrsklasse abnimmt und wobei die Verzögerungszeit zwischen 0 und einer maximalen Verzögerung liegen,
- bei dem jeweils das Datenpaket mit der frühesten Sendezeit vom ersten Knoten zu einem zweiten Knoten übertragen wird.

2. Verfahren nach Anspruch 1,
- bei dem die Sendezeit als Summe aus der Ankunftszeit des Datenpaketes und der zugeordneten Verzögerungszeit berechnet wird.

3. Verfahren nach Anspruch 1 oder 2,
- bei dem in dem ersten Knoten für jede Verkehrsklasse eine Warteschlange vorgesehen ist, in der die Datenpakete und die zugehörigen Sendezeiten der jeweiligen Verkehrsklasse gespeichert werden,
- bei dem die Warteschlange mit dem Datenpaket mit der frühesten Sendezeit ermittelt wird.

4. Verfahren nach Anspruch 3,
bei dem, falls es Datenpakete mit übereinstimmender frühester Sendezeit gibt, zunächst das Datenpaket übertragen wird, dessen Verkehrsklasse die höhere Priorität hat.

5. Verfahren nach Anspruch 3 oder 4,
- bei dem diejenigen Warteschlangen ermittelt werden, die nicht leer sind,
- bei dem zur Bestimmung des Datenpaketes mit der frühesten Sendezeit unter den nicht leeren Warteschlangen diejenige ermittelt wird, in der ein Datenpaket gespeichert ist, dessen Sendezeit kleiner oder gleich der Sendezeit der Datenpakete der anderen nicht leeren Warteschlangen ist.

6. Verfahren nach einem der Ansprüche 3 bis 5,
- bei dem zur Bestimmung des Datenpaketes mit der frühesten Sendezeit jeweils nur die Sendezeiten der ersten Datenpakete in der jeweiligen Warteschlange verglichen werden.

7. Verfahren nach einem der Ansprüche 1 bis 6,
- bei dem die Datenpakete im ersten Knoten in Teilpakete zerlegt werden,
- bei dem die Teilpakete jeweils mit der dem Datenpaket zugewiesenen Sendezeit zwischengespeichert werden,
- bei dem jeweils das Teilpaket mit der frühesten Sendezeit vom ersten Knoten zum zweiten Knoten übertragen wird.

8. Verfahren nach einem der Ansprüche 1 bis 7,
- bei dem der erste Knoten und der zweite Knoten eine Basisstation und eine Funknetzsteuerung des Funkkommunikationssystems sind.

9. Verfahren nach Anspruch 8,
- bei dem Sprachverbindungen und leitungsvermittelte Daten Paketdaten einer ersten Klasse und paketvermittelte Daten Paketdaten einer zweiten Verkehrsklasse darstellen,
- bei dem die Priorität der ersten Verkehrsklasse höher als die Priorität der zweiten Verkehrsklasse ist.
